# EUROPÄISCHE PATENTSCHRIFT

(11) **EP 1 821 390 B1**
(45) Veröffentlichungstag und Bekanntmachung des Hinweises auf die Patenterteilung: **21.10.2009**
(21) Anmeldenummer: 07002876.6
(22) Anmeldetag: 10.02.2007
(51) Int. Cl.: H02K 5/22, H02K 7/00, B60G 21/055

(54) **Elektrischer Antrieb für einen verstellbaren Stabilisator**
Electric motor for an adjustable stabiliser
Entraînement électrique pour un stabilisateur réglable

(30) Priorität: 21.02.2006 DE 102006008416
(43) Veröffentlichungstag der Anmeldung: 22.08.2007
(73) Patentinhaber: ZF Friedrichshafen AG, 88046 Friedrichshafen (DE)
(72) Erfinder: Münster, Martin, 88048 Friedrichshafen (DE); Kett, Jürgen, 88045 Friedrichshafen (DE)

(56) Entgegenhaltungen:
- WO-A-20/04085179
- DE-A1- 10 360 291
- DE-A1- 19 732 038
- US-A- 6 081 056

## Beschreibung

Die Erfindung betrifft einen elektrischen Antrieb für einen verstellbaren Stabilisator gemäß dem Oberbegriff von Patentanspruch 1.

Aus der WO 2004/085179 A1, Fig. 4 ist ein elektrischer Antrieb für einen Stabilisator bekannt. Der elektrische Antrieb umfasst ein rohrförmiges Gehäuse, an dem ein Stator befestigt ist. Koaxial zum Stator ist ein Rotor gelagert, an dem zur Lagedetektierung ein Magnet befestigt ist, der mit einem gehäuseseitigen Hall-Sensor zusammenwirkt.

In einem endseitigen Deckel ist ein Rohr zu Leitungsdurchführung in Richtung der Lagedetektierung und des Stators zu erkennen. Offensichtlich muss die Leitung bei der Montage des Deckels in die Leitungsdurchführung gefädelt werden. Eine Beschädigung ist nicht auszuschließen.

Die DE 197 32 038 A1 betrifft ein motorangetriebenes Aggregat mit einem Gehäuse, in dem eine Stromschiene angeordnet ist, die für den Stromfluss ausgehend von dem Gehäuse Kontaktstifte aufweist.

Aufgabe der vorliegenden Erfindung ist es, die elektrischen Anschlüsse und Bauteile so anzuordnen, dass eine vereinfache Montage des elektrischen Antriebs möglich wird.

Erfindungsgemäß wird die Aufgabe dadurch gelöst, dass die die Leitungsverbindung für jede Stromphase vom Stator durch den endseitigen Deckel von mindestens einem starren Bolzenelement gebildet wird und der Rotor zum Gehäuse von einer Lagerscheibe positioniert wird, die mit einer Anzahl von Durchgangsöffnungen für die Bolzenelemente ausgeführt ist, wobei in dem Gehäuse eine Platine mit einer Anzahl von elektronischen Bauteilen angeordnet ist, die mit den Bolzenelementen elektrisch leitend in Verbindung steht, wobei die Platine zwischen einer innenseitigen Stirnfläche des Deckels und der Lagerscheibe fixiert wird.

Der große Vorteil besteht darin, dass der Deckel bei der Montage ganz einfach am Gehäuse fixiert werden kann, ohne dass empfindliche Stromleitungen zu beachten sind. Es müssen auch zwischen der Platine und dem Stator keine die Montage erschwerenden flexiblen Leitungen eingesetzt werden. Der Deckel und die Lagerscheibe stellen robuste Bauteile dar, so dass die Platine sicher befestigt ist.

Zur Vermeidung eines elektrischen Kurzschlusses ist die Platine zum Deckel und zur Lagerscheibe elektrisch isoliert.

Um bei einem Systemfehler innerhalb des Stabilisators noch eine Mindestkraft zur Verfügung zu haben, ist auf der Platine zwischen den Stromphasen eine Anzahl von Kurzschlussrelais angeordnet. Bei dem elektrischen Antrieb wird dann die Feldkraft ausgenutzt, um gegeneinander verdrehbare Stabilisatorabschnitte des Stabilisators abzustützen.

Des Weiteren trägt die Platine einen Sensor zur Lagedetektierung des Rotors.

Dazu trägt der Rotor auf einer Stirnfläche in Richtung der Platine ein Gebersensorelement.

Um einen Kurzschluss zwischen den Bolzenelementen und den Durchgangsöffnungen zu vermeiden, ist jedes Bolzenelement zur Durchgangsöffnung der Lagerscheibe elektrisch isoliert.

Es ist weiter vorgesehen, dass der Stator axial kraftschlüssig zwischen dem Deckel und einer gehäuseseitigen Anschlagfläche verspannt ist. Der große Vorteil besteht darin, dass am Stator keine besonderen Maßnahmen zur Befestigung vorgenommen werden müssen. Bei der Montage wird der Stator wie eine Patrone in das Gehäuse eingeführt und anschließend über den Deckel fixiert.

Anhand der folgenden Figuren beschreibung soll die Erfindung näher erläutert werden.

Es zeigt:
- Fig. 1: Elektrischer Antrieb in einer Längsschnittdarstellung
- Fig. 2: Explosionszeichnung im Bereich einer Platine des elektrischen Antriebs nach Fig. 1

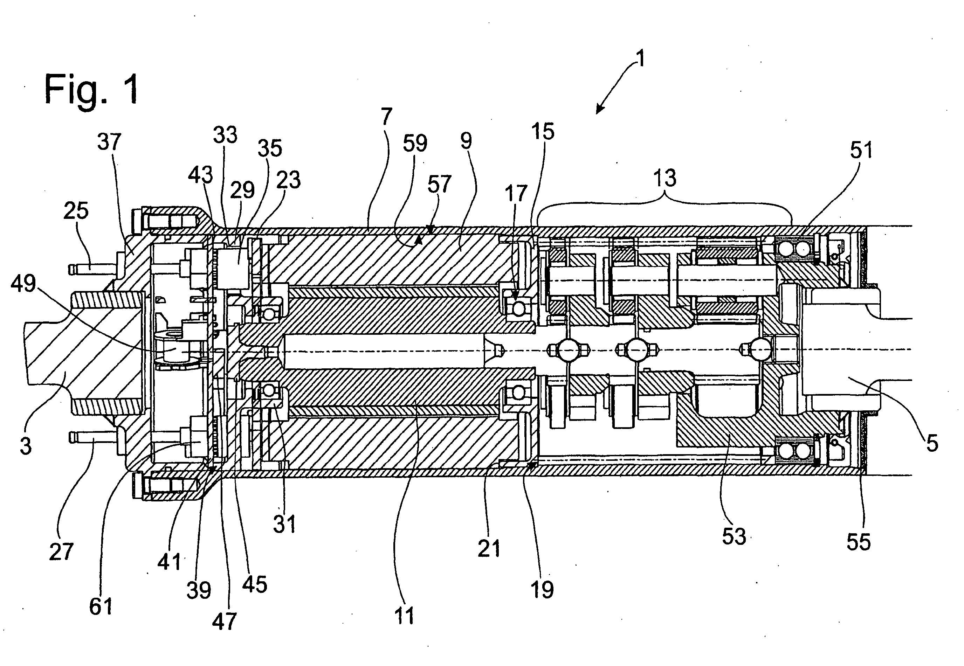

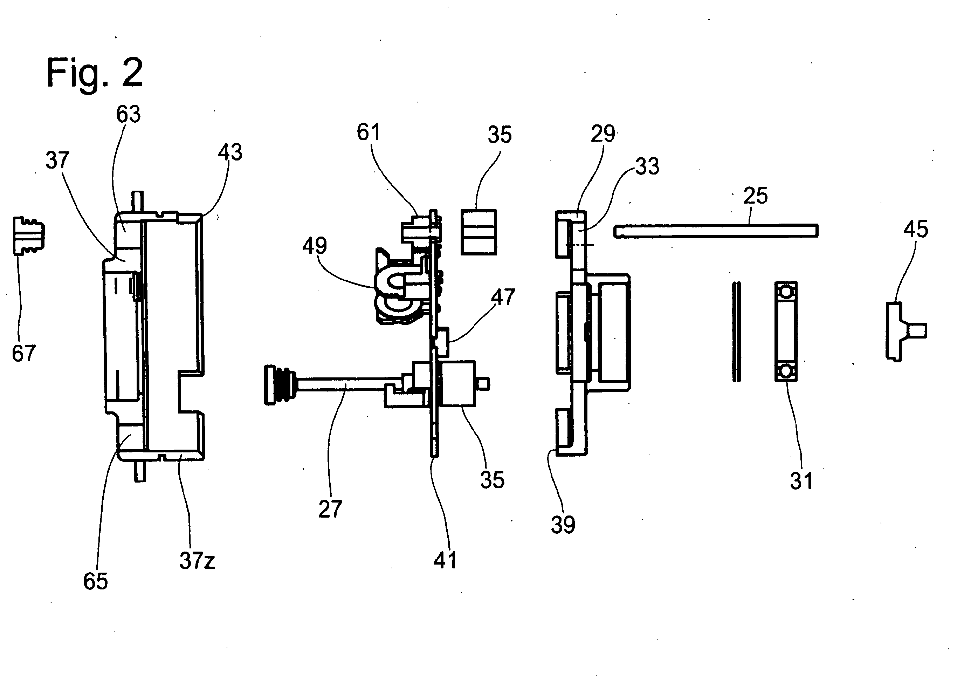

Die Figur 1 zeigt einen elektrischen Antrieb mit einem Stabilisator, der zwei über den Antrieb 1 zueinander verdrehbare Stabilisatorabschnitte 3; 5 aufweist. In einem Gehäuse 7 ist ein Stator 9 mit einem innenliegenden Rotor 11 angeordnet. Der Rotor 11 wird in Richtung eines optional einsetzbaren Getriebes 13 zum Stabilisatorabschnitt 5 von einer Lagerscheibe 15 mit einem Lager 17 positioniert. Die Lagerscheibe 15 stützt sich radial an einer Innenwandung und axial an einem Absatz 19 des Gehäuses ab. Der Stator liegt wiederum an einer axialen Stirnfläche 21 der Lagerscheibe 15 an. In Richtung des gegenüberliegenden Stabilisatorabschnitts 3 verfügt der Stator 9 über eine kreisringförmige Leiterscheibe 23, die mit drei starren Bolzenelementen 25; 27 als elektrische Leitungsverbindungen verbunden ist. Das dritte Bolzenelement ist aufgrund des Schnittverlaufs nicht dargestellt. Eine zweite Lagerscheibe 29 mit mindestens einem Lager 31 stützt den Rotor 11 und verfügt über Durchgangsöffnungen 33 für die Bolzenelemente 25; 27. Die Bolzenelemente 25 ; 27 sind mit Isolatoren 35 im Bereich der Durchgangsöffnungen 33 ausgeführt. Auf einer in Richtung eines Deckels 37 weisenden Stirnfläche 39 der Lagerscheibe 29 ist eine Platine 41 mit einer Anzahl von elektronischen Bauteilen angeordnet, die mit den Bolzenelementen 25 27 elektrisch leitend verbunden ist. In der Platine sind Anschlussöffnungen 41 a für die Aufnahme der Bolzenelemente 25; 27 ausgeführt. Die Platine 41 wird zwischen einer innenseitigen Stirnfläche 43 des Deckels 37 und der in Richtung des Deckels weisenden Stirnfläche der Lagerscheibe fixiert. In dem Kontaktbereich mit dem Deckel 37 und der Lagerscheibe 29 ist die Platine 41 elektrisch isoliert. Zum besseren Verständnis wird ergänzend auf die Darstellung gemäß der Fig. 2 verwiesen.

An dem in Richtung der Platine 41 weisenden Ende des Rotors 11 ist ein Gebersensorelement 45 zur Lagedetektierung des Rotors 11 angeordnet. Die Unterseite der Platine 41 trägt einen mit dem Sensor 45 des Rotors 11 zusammenwirkenden Sensor 47. Des Weiteren ist die Platine mit einer Anzahl von Kurschlussrelais 49 zwischen den Stromphasen des Stators 9 bestückt.

Bei der Montage wird das Getriebe 13, das als zweistufiges Planetenradgetriebe ausgeführt ist, in das Gehäuse 7 eingeführt. In Richtung des rechten Stabilisatorabschnitts 5 dient ein Lager 51 zur radialen Abstützung eines PJanetenradträgers 53. Eine Kappe 55 verschließt das Gehäuse 7. Danach wird über die linke Gehäuseöffnung die Lagerscheibe 15 mit dem Lager 17 eingeschoben, bis die Lagerscheibe 15 an dem Absatz 19 des Gehäuses 7zur Anlage kommt. In einem weiteren Arbeitsschritt wird der Stator 9 soweit in das Gehäuse 7 eingeführt, bis er an der Stirnfläche 21 der Lagerscheibe 15 anliegt. Die äußere Mantelfläche 57 des Stators 9 und die Innenwandung 59 des Gehäuses 7 bilden eine Übergangspassung, so dass der Stator 9 radial von dem Gehäuse 7 zentriert wird, jedoch leicht montierbar bleibt. Mit dem Stator 9 ist die Leiterscheibe 23 für die Stromphasen des Stators 9 ebenfalls montiert. Auch die Isolatoren 35 befinden sich bereits auf den starren Bolzenelementen 25; 27. In den Stator 9 führt man den Rotor 11 samt Sensor 45 ein, der mit einem Lagersitz in das Lager 17 der Lagerscheibe 15 eingreift. Danach wird die Lagerscheibe 29 mit dem Lager 31 für den Rotor 11 in das Gehäuse 7 geschoben, wobei die Lagerscheibe 29 mit ihren Durchgangsöffnungen 43 zu den starren Bolzenelementen 25; 27 ausgerichtet ist. In einem weiteren Arbeitsschritt wird die mit den elektrischen Bauteilen bestückte Platine 41 eingeführt. Auf der Oberseite dienen stromleitende Kappen 61 zur Übertragung an die elektrischen Bauteile. Abschließend wird der Deckel 37 mit Hilfe eines Zentrieransatzes 37z montiert, wobei die Bolzenelemente 25; 27 durch Öffnungen 63; 65 (Fig. 2) im Deckel außenseitig für mindestens einen nicht dargestellten Stecker zugänglich sind. Es kommen wiederum Isolierringe 67 zwischen dem Deckel 37 und den Bolzenelementen 25; 27 zur Anwendung. Der Deckel 37 verspannt mit seiner inneren Stirnfläche 43 die Platine 41 mit der Lagerscheibe 29, aber auch den Stator mit der gehäuseseitigen Anschlagfläche 19. Der fertigmontierte elektrische Antrieb 1 kann danach mit den Stabilisatorabschnitten 3; 5 verbunden werden.

## Patentansprüche

1. Elektrischer Antrieb (1) für einen verstellbaren Stabilisator (3; 5), umfassend ein Gehäuse (7), in dem ortsfest ein Stator (9) und koaxial dazu ein Rotor (11) und eine Elektronik (45; 47) zum Betrieb des elektrischen Antriebs (1) angeordnet sind, wobei mindestens eine Leitungsverbindung (25; 27) ausgehend vom Stator (9) durch einen Deckel (37) des Gehäuses (7) besteht,
**dadurch gekennzeichnet,**
**dass** die Leitungsverbindung für jede Stromphase vom Stator (9) durch den endseitigen Deckel (37) von mindestens einem starren Bolzenelement (25; 27) gebildet wird und der Rotor (11) zum Gehäuse (7) von einer Lagerscheibe (17; 29) positioniert wird, die mit einer Anzahl von Durchgangsöffnungen (33) für die Bolzenelemente (25; 27) ausgeführt ist, wobei in dem Gehäuse (7) eine Platine (41) mit einer Anzahl von elektronischen Bauteilen (45; 47) angeordnet ist, die mit den Bolzenelementen (25; 47) elektrisch leitend in Verbindung steht, wobei die Platine (41) zwischen einer innenseitigen Stirnfläche (43) des Deckels (37) und der Lagerscheibe (29) fixiert wird.

2. Elektrischer Antrieb nach Anspruch 1,
**dadurch gekennzeichnet,**
**dass** die Platine (41) zum Deckel (37) und zur Lagerscheibe (29) elektrisch isoliert ist.

3. Elektrischer Antrieb nach Anspruch 1,
**dadurch gekennzeichnet,**
**dass** auf der Platine (41) zwischen den Stromphasen des Stators (9) eine Anzahl von Kurzschlussrelais (49) angeordnet ist.

4. Elektrischer Antrieb nach Anspruch 1,
**dadurch gekennzeichnet,**
**dass** die Platine (41) einen Sensor (47) zur Lagedetektierung des Rotors (11) trägt.

5. Elektrischer Antrieb nach Anspruch 1,
**dadurch gekennzeichnet,**
**dass** der Rotor (11) auf einer Stirnfläche in Richtung der Platine (41) ein Gebersensorelement (45) für die Lagedetektierung trägt.

6. Elektrischer Antrieb nach einem der Ansprüche 1 bis 5,
**dadurch gekennzeichnet,**
**dass** jedes Bolzenelement (25; 27) zur Durchgangsöffnung (33) der Lagerscheibe (29) elektrisch isoliert ist.

7. Elektrischer Antrieb nach einem der Ansprüche 1 bis 6,
**dadurch gekennzeichnet,**
**dass** der Stator (9) axial kraftschlüssig zwischen dem Deckel (37) und einer gehäuseseitigen Anschlagfläche (19) verspannt ist.

## Claims

1. Electric drive (1) for an adjustable stabilizer (3; 5), comprising a housing (7) in which a stator (9) and, coaxially to the said stator, a rotor (11) and an electronics system (45; 47) for operating the electric drive (1) are arranged in a fixed position, with at least one line connection (25; 27) being established through a cover (37) of the housing (7) starting from the stator (9),
**characterized**
**in that** the line connection for each current phase of the stator (9) is formed by the end-side cover (37) of at least one inflexible pin element (25; 27), and the rotor (11) is positioned relative to the housing (7) by a bearing disc (17; 29) which is designed with a number of passage openings (33) for the pin elements (25; 27), with a printed circuit board (41) which has a number of electronic components (45; 47) and is electrically conductively connected to the pin elements (25; 47) being arranged in the housing (7), with the printed circuit board (41) being fixed between an inner end face (43) of the cover (37) and the bearing disc (29).

2. Electric drive according to Claim 1,
**characterized**
**in that** the printed circuit board (41) is electrically insulated in relation to the cover (37) and in relation to the bearing disc (29).

3. Electric drive according to Claim 1,
**characterized**
**in that** a number of short-circuit relays (49) are arranged on the printed circuit board (41) between the current phases of the stator (9).

4. Electric drive according to Claim 1,
**characterized**
**in that** the printed circuit board (41) is fitted with a sensor (47) for detecting the position of the rotor (11).

5. Electric drive according to Claim 1,
**characterized**
**in that** an end face of the rotor (11), which end face faces in the direction of the printed circuit board (41), is fitted with a transmitter sensor element (45) for position detection.

6. Electric drive according to one of Claims 1 to 5,
**characterized**
**in that** each pin element (25; 27) is electrically insulated from the passage opening (33) in the bearing disc (29).

7. Electric drive according to one of Claims 1 to 6,
**characterized**
**in that** the stator (9) is clamped in an axially force-fitting manner between the cover (37) and a housing-side stop face (19).

## Revendications

1. Entraînement électrique (1) pour un stabilisateur réglable (3 ; 5), comprenant un boîtier (7), dans lequel sont disposés, de manière fixe, un stator (9) et coaxialement à celui-ci un rotor (11), et un système électronique (45 ; 47) pour faire fonctionner l'entraînement électrique (1), au moins une connexion par câble (25 ; 27) partant du stator (9) et traversant un couvercle (37) du boîtier (7),
**caractérisé en ce que**
la connexion par câble est formée pour chaque phase de courant du stator (9) à travers le couvercle (37) du côté de l'extrémité par au moins un élément de boulon rigide (25 ; 27) et **en ce que** le rotor (11) est positionné par rapport au boîtier (7) par un disque de palier (17 ; 29), qui est réalisé avec un certain nombre d'ouvertures de passage (33) pour les éléments de boulon (25 ; 27), une platine (41) étant disposée dans le boîtier (7) avec un certain nombre de composants électroniques (45 ; 47), lesquels sont en liaison électriquement conductrice avec les éléments de boulon (25 ; 47), la platine (41) étant fixée entre une surface frontale du côté interne (43) du couvercle (37) et le disque de palier (29).

2. Entraînement électrique selon la revendication 1,
**caractérisé en ce que**
la platine (41) est isolée électriquement par rapport au couvercle (37) et par rapport au disque de palier (29).

3. Entraînement électrique selon la revendication 1,
**caractérisé en ce que**
l'on dispose un certain nombre de relais de court-circuit (49) sur la platine (41) entre les phases de courant du stator (9).

4. Entraînement électrique selon la revendication 1,
**caractérisé en ce que**
la platine (41) porte un capteur (47) pour la détection de la position du rotor (11).

5. Entraînement électrique selon la revendication 1,
**caractérisé en ce que**
le rotor (11) porte sur une surface frontale dans la direction de la platine (41) un élément de capteur maître (45) pour la détection de la position.

6. Entraînement électrique selon l'une quelconque des revendications 1 à 5,
**caractérisé en ce que** chaque élément de boulon (25 ; 27) est isolé électriquement par rapport à l'ouverture de passage (33) du disque de palier (29).

7. Entraînement électrique selon l'une quelconque des revendications 1 à 6,
**caractérisé en ce que**
le stator (9) est serré axialement par engagement par force entre le couvercle (37) et une surface de butée (19) du côté du boîtier.
